# EUROPEAN PATENT APPLICATION

(11) **EP 2 037 124 A1**
(43) Date of publication of application: **18.03.2009**
(21) Application number: 07850171.5
(22) Date of filing: 06.12.2007
(51) Int. Cl.: F04B 43/04, F04B 45/04, F04B 45/047

(54) **PIEZOELECTRIC PUMP**

(30) Priority: 09.12.2006 JP 2006332692
(71) Applicant: Murata Manufacturing Co. Ltd., Kyoto 617-8555 (JP)
(72) Inventor: KAMITANI, Gaku, Nagaokakyo-shi Kyoto 617-8555 (JP); SUNAGA, Midori, Nagaokakyo-shi Kyoto 617-8555 (JP)
(74) Representative: Reeve, Nicholas Edward
(86) International application number: PCT/JP2007/073555
(87) International publication number: WO 2008/069264

(57) **Abstract**

[Object] To provide a piezoelectric pump that has a simple structure and that can increase the discharging pressure.

[Solving Means] A first opening 11 is provided in a center portion of a pump body 10, and a second opening 12 is provided apart from the center. An outer peripheral portion of a metal diaphragm 20 is fixed to the pump body 10, and a piezoelectric element 23 having a size such as to cover the first opening 11 and such as not to reach the second opening 12 is bonded to a back center portion of the diaphragm 20. By applying a voltage near the resonance frequency to the piezoelectric element 23, a portion of the diaphragm 20 opposing the first opening 11 and a portion of the diaphragm 20 opposing the second opening 12 are bent in opposite directions so that fluid is drawn in from one of the first opening 11 and the second opening 12 and is discharged from the other opening. This can increase the discharging pressure, and can reliably discharge the fluid even under a condition where the pressure on the discharging side is high.

## Description

### Technical Field

The present invention relates to piezoelectric pumps, and more particularly, to a piezoelectric pump using a diaphragm that is bent by a piezoelectric element.

### Background Art

Piezoelectric pumps are used as cooling pumps in small electronic devices, such as notebook personal computers, and fuel transportation pumps in fuel cells. A piezoelectric pump is a pump using a diaphragm that is bent by the application of voltage to a piezoelectric element, and has advantages of a simple structure, a low-profile structure, and low power consumption. In a piezoelectric pump using a piezoelectric element as a driving source, check valves are respectively provided at an inlet and an outlet. However, reliability of the check valves is reduced with use for a long period, and the fluid is not sufficiently transported because of adhesion of foreign substances, such as dust, to the check valves. Further, when the piezoelectric element is driven at a high frequency, the check valves, to which foreign substances, such as dust, adhere, do not follow the driving, and transportation of the fluid is impossible.

Patent Documents 1 and 2 propose a piezoelectric pump in which a diaphragm is mounted in contact with a pump body having an inlet and an outlet and in which a plurality of piezoelectric elements are mounted on the diaphragm so as to be arranged from the inlet to the outlet. In this pump, the piezoelectric elements are sequentially driven from a piezoelectric element close to the inlet to a piezoelectric element close to the outlet, so that the diaphragm can be sequentially bent from the inlet toward the outlet so as to push out the fluid from the inlet toward the outlet. When the application of voltage to the piezoelectric elements is stopped, a channel between the inlet and the outlet is closed by restration of the diaphragm. Therefore, it is possible to omit check valves from the inlet and the outlet.

Unfortunately, since a plurality of piezoelectric elements need to be arranged in a plane in the piezoelectric pump having this structure, the piezoelectric pump has a large size and a complicated structure. Moreover, a driving circuit for sequentially driving the piezoelectric elements is complicated, and this increases the cost.

Patent Document 3 discloses a fluid pump having no check valve. In a fluid pump disclosed particularly in Fig. 10 of Patent Document 3, a pump chamber is formed between a pump body and a diaphragm, a first opening is provided in a center portion of the pump body, a second opening is provided in a peripheral portion of the pump body, an elastic buffer is provided in the diaphragm, and the diaphragm is bent by causing the center portion of the diaphragm by another driving means to reciprocate. When the diaphragm opens the first opening, fluid is drawn into the pump chamber from the first opening. When the diaphragm closes the first opening, the buffer portion corresponding to the second openings is bent, and the fluid is discharged from the second openings by the elastic restoring force of the buffer portion.

In Patent Document 3, since the diaphragm is merely driven in a reciprocating manner by the single driving source, the structure is simple. However, since only the portion of the diaphragm opposing the first opening, that is, only the center portion of the diaphragm is displaced and the peripheral portion (buffer portion) of the diaphragm is bent after the displacement, the diaphragm needs to be formed of a soft material. This makes it impossible to increase the discharging pressure. For example, when the fluid is compressible fluid such as air, a very soft material, such as rubber or resin, needs to be used in order to elastically deform the buffer portion of the diaphragm, and the discharging pressure is decreased. As a result, the fluid sometimes cannot be reliably discharged under a condition that the pressure outside the pump chamber is high.
Patent Document 1: Japanese Unexamined Patent
   Application Publication No. 2-149778
Patent Document 2: Japanese Unexamined Patent
   Application Publication No. 4-86388
Patent Document 3: Japanese Unexamined Patent
   Application Publication (Translation of PCT application) No. 10-511165

### Disclosure of Invention

### Problems to be Solved by the Invention

Accordingly, an object of a preferred embodiment of the present invention is to provide a piezoelectric pump that has a simple structure and that can increase the discharging pressure.

### Means for Solving the Problems

In order to achieve the above object, the present invention provides a piezoelectric pump including a pump body; a diaphragm fixed at an outer peripheral portion to the pump body; a piezoelectric element bonded to a center portion of the diaphragm; a first opening provided in a portion of the pump body opposing the substantial center portion of the diaphragm; and a second opening provided in an intermediate region between the center portion and the outer peripheral portion of the diaphragm or in a portion of the pump body opposing the intermediate region. The diaphragm is formed by a metal plate, and the piezoelectric element has a size such as to cover the first opening and such as not to reach the second opening. A portion of the diaphragm opposing the first opening and a portion of the diaphragm opposing the second opening are bent in opposite directions by applying a voltage having a predetermined frequency to the piezoelectric element so that fluid is drawn in from one of the first opening and the second opening and is discharged from the other opening.

Unlike Patent Document 3 in which fluid is pushed out by using an elastic restoring force of the diaphragm itself, according to the present invention, a metal plate having a high Young's modulus is used as the diaphragm and the fluid is discharged by forcibly bending the diaphragm by the piezoelectric element. In particular, since the piezoelectric element has a size such as to cover the first opening and such as not to reach the second opening, the portion of the diaphragm opposing the first opening and the portion of the diaphragm opposing the second opening can be efficiently bent in opposite directions. For this reason, the discharging pressure can be increased, and the fluid can be reliably discharged even under a condition where the pressure on the discharging side is high. In particular, since the diaphragm is formed by the metal plate having a high Young's modulus, it can properly follow the piezoelectric element, and this allows operation at a high frequency.

While the frequency of the voltage applied to the piezoelectric element can be arbitrarily selected, it is preferable that the piezoelectric element be driven at a frequency near the resonance frequency of a displacement member defined by the diaphragm and the piezoelectric element, since the displacement volume of the diaphragm is quite large, and a high flow rate can be obtained. When driving is performed in a primary resonance mode (first resonance frequency), fluid can be drawn in from the first opening, and can be discharged from the second opening. When a tertiary resonance mode (tertiary resonance frequency) is used, fluid can be drawn in from the second opening, and can be discharged from the first opening. While driving can be performed at a high frequency in both the primary resonance mode and the tertiary resonance mode, in particular, when the tertiary resonance mode is used, operation can be performed at a quite high frequency that is about three times of that in the primary resonance mode. Since this allows driving at a frequency above an audible region, noise can be avoided. As for this, for example, when a soft material is used as the diaphragm, as in Patent Document 3, there is a time lag between displacement of the center portion of the diaphragm and displacement of the peripheral portion of the diaphragm. Therefore, the fluid pump in Patent Document 3 cannot be driven at a frequency higher than or equal to a frequency corresponding to the time lag. In contrast, since the piezoelectric pump of the present invention uses a metal plate having a high Young's modulus as the diaphragm, it can be driven at a high resonance frequency of the first resonance mode and the tertiary resonance mode. In particular, when driving is performed in a tertiary resonance mode beyond the human audible region, noise is not produced, and a high flow rate can be obtained. Further, since the displacement is small, stress generated in a fixed portion between the pump body and the diaphragm is reduced, and reliability is thereby improved. It is preferable that the Young's modulus of the diaphragm be 100 GPa or more. When the Young's modulus is 100 Gpa or more, a high follow-up ability is obtained when driving is performed in any of the primary resonance mode and the tertiary resonance mode. Moreover, since the loss during driving is small, the amount of generated heat is small, and the power efficiency is high.

The piezoelectric pump of the present invention is suited to transport compressible fluid such as air. When a piezoelectric pump discharges imcompressible fluid such as liquid, in general, check valves formed of a soft material, such as rubber or resin, are respectively provided at the inlet and the outlet, and a piezoelectric element is driven at a low frequency of about several tens of hertz. When this piezoelectric pump is used as a pump for discharging compressible fluid such as air, the displacement amount of the piezoelectric element is quite small, and little fluid can be discharged. When the piezoelectric element is driven near the resonance frequency (primary resonance frequency or tertiary resonance frequency) of the displacement member defined by the diaphragm and the piezoelectric element, the maximum displacement can be obtained. However, since the resonance frequency is a high frequency of the order of kilohertz, the check valves cannot perform a follow-up operation. Since a check valve is not provided in the present invention, even when the piezoelectric element is driven at the frequency near the resonance frequency, imcompressible fluid can be efficiently transported without being restricted by the check valve. Further, there is no fear that operation failure will be caused by adhesion of dust or the like to the check valve, and a highly reliable piezoelectric pump can be provided.

It is preferable that the second opening be provided at a position where the diaphragm is maximally displaced in a tertiary resonance mode or outside the position. While the position where the diaphragm is maximally displaced in the tertiary resonance mode differs in accordance with the area ratio of the piezoelectric element and the diaphragm or the Young's modulus of the diaphragm, when the second opening (inlet) is provided at the position of maximum displacement or outside the position, a sufficient sealing ability of the second opening (inlet) can be obtained when discharging the fluid from the first opening (discharging port) in an operation cycle of the piezoelectric pump, and backflow of the fluid to be discharged can be prevented. This increases not only the discharging pressure, but also the discharging flow rate.

A plurality of the second openings may be provided on the same circumference centered on the first opening. When driving is performed in a tertiary resonance mode, the second opening serves as an inlet. If one second opening is provided, fluid does sometimes not rapidly flow into an annular pocket space formed between the pump body and the peripheral portion of the diaphragm, and a sufficient amount of fluid is not discharged. In contrast, when a plurality of second openings are provided on the same circumference, the fluid can rapidly flow into the annular pocket space, and the amount of discharged fluid can be increased. Advantages of the Preferred Embodiments of the Invention

According to the present invention, the piezoelectric element having a size such as to cover the first opening and such as not to reach the second opening is bonded to the center portion of the metal diaphragm, and the piezoelectric element is driven by a voltage having a predetermined frequency so that the portion of the diaphragm opposing the first opening and the portion of the diaphragm opposing the second opening are bent in opposite directions. Therefore, it is possible to increase the discharging pressure, and to reliably discharge the fluid even under the condition where the pressure on the discharging side is high. Moreover, the piezoelectric element can be formed only by the pump body and the diaphragm having the piezoelectric element bonded thereto, and an auxiliary component, such as a check valve, is unnecessary. This makes it possible to realize a small, thin, and highly reliable piezoelectric pump having a very simple structure.

### Best Modes for Carrying Out the Invention

Preferred modes of the present invention will be described below with reference to embodiments.

### First Embodiment

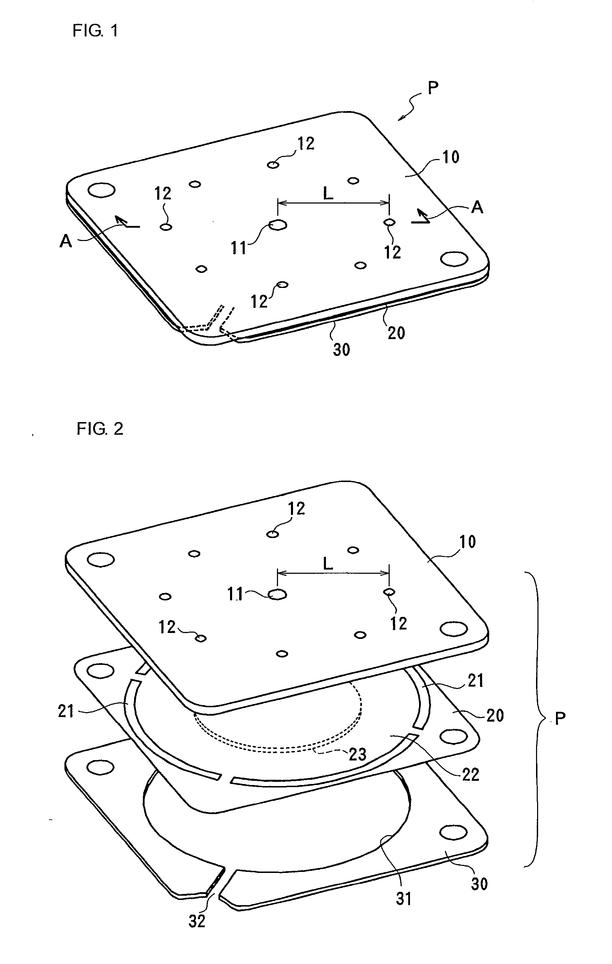

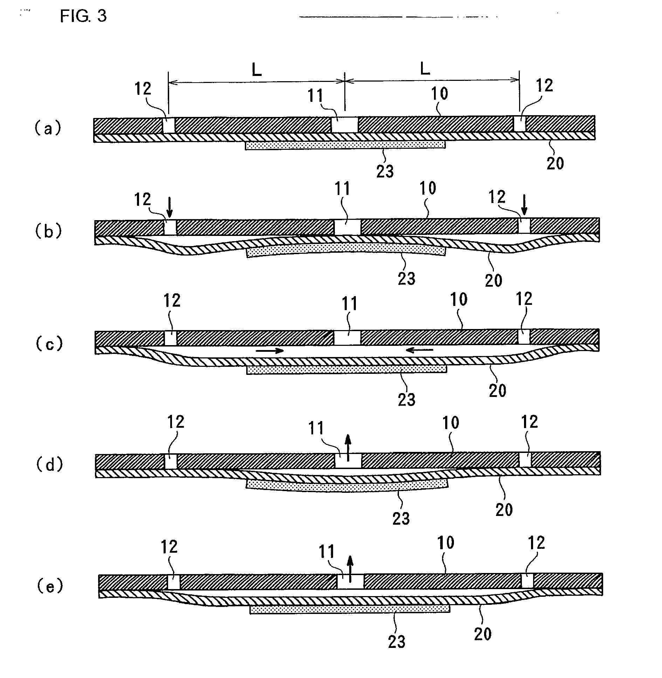

Figs. 1 to 3 show a piezoelectric pump according to a first embodiment. Fig. 1 is a general perspective view of a piezoelectric pump according to the present invention, Fig. 2 is an exploded perspective view of the piezoelectric pump shown in Fig. 1, and Fig. 3 is a cross-sectional view, taken along line A-A in Fig. 1.

In this embodiment, a piezoelectric pump P has a structure in which a top plate 10 that forms a pump body, a diaphragm 20, and an annular presser plate 30 are stacked in order, and these stacked components are bonded together. The top plate 10 is shaped like a flat plate having rigidity. A first opening 11 is provided at the center of the top plate 10, and a plurality of second openings 12 are provided on the same circumference centered on the first opening 11. While eight second openings 12 are provided so as to ensure the flow rate herein, the number of second openings 12 can be arbitrarily set in accordance with the required flow rate.

The diaphragm 20 is formed by a thin metal plate having spring elasticity. As shown in Fig. 2, the diaphragm 20 has a plurality of arc-shaped slits 21. An adhesive is applied on front and back surfaces of a region outside the slits 21, and the outside region of the diaphragm 20 is bonded and fixed by the top plate 10 and the presser plate 30. Since the region in which the adhesive is applied is separated by the slits 21, the adhesive will not spread to a circular region 22 inside the slits 21. An inner peripheral edge 31 of the presser plate 30 has a diameter slightly smaller than the diameter of the circular region 22 of the diaphragm 20, and the circular region 22 surrounded by the inner peripheral edge 31 is bendable.

The diaphragm 20 is placed in contact with a lower surface of the top plate 10. A circular piezoelectric element 23 is bonded onto a back surface (lower surface) of the diaphragm 20 and at the center of the circular region 22. The center of the circular region 22 of the diaphragm 20 (center of the piezoelectric element 23) is coaxial with the center of the first opening 11 of the top plate 10. Since the radius of the piezoelectric element 23 is smaller than the distance L between the first opening 11 and the second openings 12, the second openings 12 are outside the piezoelectric element 23. It is preferable that the second openings 12 be provided at the same position as a maximum displacement position where the diaphragm 20 is maximally displaced in a tertiary resonance mode or a position slightly shifted outward from the maximum displacement position.

The thickness of the presser plate 30 is larger than the sum of the thickness of the piezoelectric element 23, which will be described below, and the displacement amount of the diaphragm 20. This prevents the piezoelectric element 23 from touching a substrate or the like when the piezoelectric pump P is mounted on the substrate. A cut groove 32 is provided in a portion of the presser plate 30. This groove prevents an enclosed space from being formed on the lower side of the diaphragm 20 when the piezoelectric pump P is mounted on a substrate or the like, and allows a wire to be led out to the piezoelectric element therefrom.

In this embodiment, a piezoelectric ceramics single plate having electrodes on its front and back surfaces is used as the piezoelectric element 23, and is bonded to the back surface of the diaphragm 20 (surface opposite the top plate 10) so as to define a unimorph vibrating plate serving as a displacement member. Since the piezoelectric element 23 is expanded and contracted in a planar direction by the application of an alternating voltage (sinusoidal wave or rectangular wave), the diaphragm 20 including the piezoelectric element 23 entirely bends in the thickness direction. When driving is performed in a tertiary resonance mode (about 15 kHz) of the displacement member defined by the diaphragm and the piezoelectric element, the diaphragm 20 bends so as to be maximally displaced at a peripheral portion substantially corresponding to the second openings 12. When driving is performed in a primary resonance mode (about 5 kHz) of the displacement member defined by the diaphragm and the piezoelectric element, the diaphragm 20 bends so as to be maximally displaced at the center portion. It is preferable that the voltage applied to the piezoelectric element 23 be about ±60 V (120 Vpp) to ±120 V (240 Vpp).

Figs. 3(a) to 3(e) show a pumping operation in the tertiary resonance mode of the piezoelectric pump P, that is, an operation performed when a voltage close to a tertiary resonance frequency is applied to the piezoelectric element 23. Fig. 3(a) shows an initial state, in which the entire surface of the diaphragm 20 is in contact with the pump body 10 and the first opening 11 and the second openings 12 are closed. Fig. 3(b) shows the first quarter period of the voltage applied to the piezoelectric element 23. Since the diaphragm 20 convexly bends upward, a center portion of the diaphragm 20 is pressed against the pump body 10, and a peripheral portion of the diaphragm 20 separates from the pump body 10. For this reason, the first opening 11 remains closed. However, since an annular pocket space is formed between the peripheral portion of the diaphragm 20 and the pump body 10, fluid is drawn into the pocket space from the second openings 12. In the next quarter period, the mass of a region of the diaphragm 20 on which the piezoelectric element 23 is bonded is larger than that of a region on which the piezoelectric element 23 is not bonded, because of the presence of the piezoelectric element 23, and a greater inertia effect is provided. Therefore, as shown in Fig. 3(c), the diaphragm 20 returns to a flat state on a side closer to the diaphragm (lower side) than the initial state, corresponding to the position of center of gravity of the piezoelectric element 23. In this case, since a continuous pocket space is formed between the diaphragm 20 and the pump body 10, the fluid is transferred toward the center in the pocket space formed between the diaphragm 20 and the pump body 10. In this case, both the first opening 11 and the second openings 12 are open slightly. In the next quarter period, as shown in Fig. 3(d), the diaphragm 20 convexly bends downward. Therefore, the peripheral portion of the diaphragm 20 is pressed against the pump body 10, and the second openings 12 are closed. For this reason, the fluid between the diaphragm 20 and the pump body 10 is collected to the center, and is pushed out from the first opening 11. In the next quarter period, as shown in Fig. 3(e), the piezoelectric element 23 attempts to return to a flat state. However, a pocket space thinner than the pocket space shown in Fig. 3(c) is formed, because of the position of center of gravity of the piezoelectric element 23. The outflow of the fluid continues until the diaphragm 20 is brought into contact with the first opening 11 again, as show in Fig. 3(b). Then, the operation of the diaphragm 20 returns to the operation shown in Fig. 3(b), and the operations shown in Figs. 3(b) to 3(e) are repeated periodically. When the piezoelectric element 23 is thus driven in the tertiary resonance mode, the fluid can be drawn in from the second openings 12 and can be discharged from the first opening 11 provided at the center.

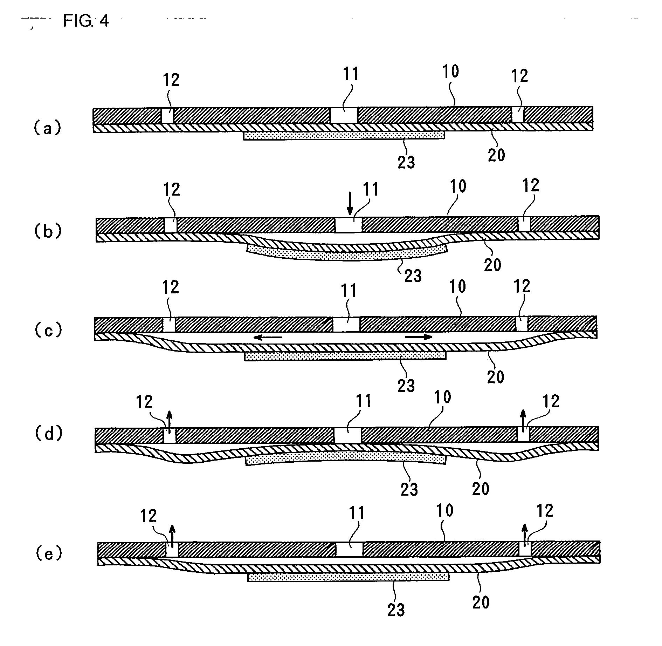

Figs. 4(a) to 4(d) show a pumping operation in a primary resonance mode of the piezoelectric pump P. Fig. 4(a) shows an initial state, and Fig. 4(b) shows the first quarter period of the voltage applied to the piezoelectric element 23. Since the diaphragm 20 convexly bends downward, a pocket space is formed between the center portion of the diaphragm 20 and the pump body 10, and fluid is drawn into the pocket space from the first openings 11. In the next quarter period, the mass of the region of the diaphragm 20 on which the piezoelectric element 23 is bonded is larger than that of the region on which the piezoelectric element 23 is not bonded, because of the presence of the piezoelectric element 23, and a greater inertia effect is provided. Therefore, as shown in Fig. 4(c), the diaphragm 20 returns to a flat state on a side slightly closer to the diaphragm than the initial state, corresponding to the position of center of gravity of the piezoelectric element 23. In this case, the fluid is transferred toward the outer periphery in the pocket space formed between the diaphragm 20 and the pump body 10. In this case, both the first opening 11 and the second openings 12 are open slightly. In the next quarter period, as shown in Fig. 4(d), the diaphragm 20 convexly bends upward. Therefore, the center portion of the diaphragm 20 is pressed against the pump body 10, and the first opening 11 is closed. For this reason, the fluid between the diaphragm 20 and the pump body 10 is collected to the peripheral portion, and is pushed out from the second openings 12. In the next quarter period, when the piezoelectric element 23 is going to return to a flat state, as shown in Fig. 4(e), downward inertia is generated in the piezoelectric element 23, and a pocket space thinner than the pocket space shown in Fig. 4(c) is formed. The outflow of the fluid continues until the diaphragm 20 is brought into contact with the second openings 12 again in the next quarter period, as show in Fig. 4(b). Then, the operation of the diaphragm 20 returns to the operation shown in Fig. 4(b), and the operations shown in Figs. 4(b) to 4(e) are repeated periodically. When the piezoelectric element 23 is thus driven in the primary resonance mode, the fluid can be drawn in from the first opening 11 at the center and can be discharged from the second openings 12 provided on the periphery.

An experiment was conducted by using the piezoelectric pump P as an air supply pump for a fuel cell under the following conditions. In this experiment, driving was performed in a tertiary resonance mode.
Applied Voltage: rectangular wave voltage of 15.5 kHz and ±60 V to ±90 V
Diaphragm: SUS plate having a thickness of 0.1 mm
Piezoelectric Element: a PZT plate having a diameter of 12. 7 mm
Diameter of First Opening: 1.3 mm
Diameter of Second Openings: 0.8 mm x 8 openings
Distance L: 8.425 mm
Diameter of Displacement Region of Diaphragm: 20 mm

When the piezoelectric pump P was driven under the above-described conditions, a static pressure of 7.5 kPa and a no-load flow rate of 2 ml/s could be obtained. As a result, it was confirmed that a piezoelectric pump having a high discharging pressure could be obtained. Further, driving was performed at a high frequency using the tertiary resonance mode, and the auditory sensitivity was low at this frequency. Therefore, noise could be avoided.

### Second Embodiment

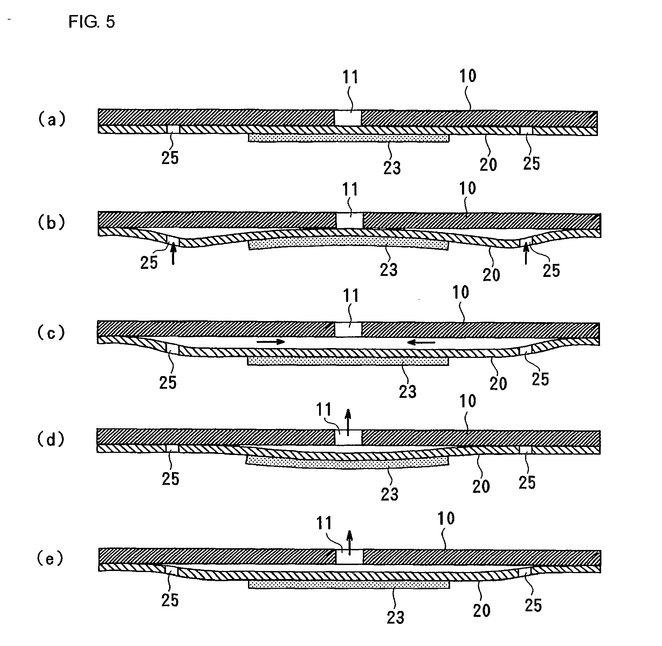

Fig. 5 shows a pumping operation in a tertiary resonance mode according to a second embodiment of the present invention. The same components as those shown in Fig. 3 are denoted by the same reference numerals, and redundant descriptions thereof are omitted. While the second openings 12 are provided in the pump body 10 in the first embodiment, second openings 25 are provided in a diaphragm 20 in this embodiment. In this case, when driving is performed in a tertiary resonance mode, fluid can be drawn in from the second openings 25 on the back side of a piezoelectric pump and can be discharged from a first opening 11 on the front side. This structure is suitable for an air supply pump in a fuel cell or a cooling pump.

### Third Embodiment

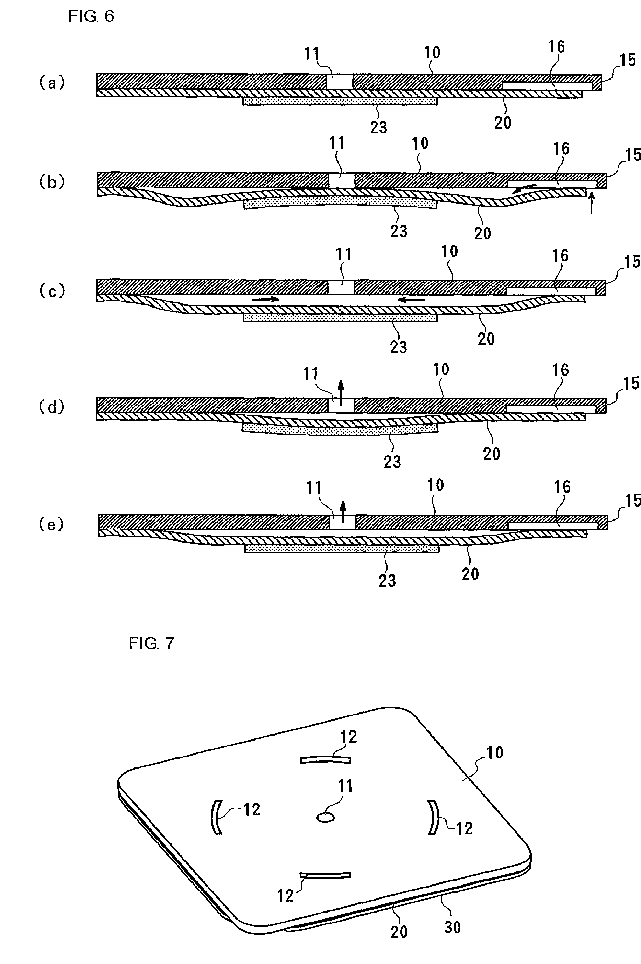

Fig. 6 shows a pumping operation in a tertiary resonance mode according to a third embodiment of the present invention. The same components as those shown in Fig. 3 are denoted by the same reference numerals, and redundant descriptions thereof are omitted. In this embodiment, a part of a pump body 10 extends outward from a diaphragm 20, and a second opening 16 shaped like a concave groove is provided on a lower side of an extending portion 15 so as to extend from an inner side of an outer peripheral portion to an outer side of the diaphragm 20. An inner edge of the second opening 16 is provided outside the outer periphery of a piezoelectric element 23 and inside a fixed outer peripheral portion of the diaphragm 20, and an outer edge thereof is open on the lower side from the extending portion 15. The second opening 16 does not always need to be shaped like a concave groove, and may be formed by a communicating hole that is open outside the piezoelectric element 23 and inside the fixed outer peripheral portion of the diaphragm 20 at an inner edge and that is open outside the fixed outer peripheral portion of the diaphragm 20 at an outer edge. This case is preferred, since a greater strength can be maintained than when the openings are provided in the diaphragm 20, as in the second embodiment, and fluid can be drawn in from the back side (lower side) of the piezoelectric pump and can be discharged from the front side (upper side) when driving is performed in a tertiary resonance mode.

### Fourth Embodiment

Fig. 7 shows a fourth embodiment of the present invention. In this embodiment, second openings 12 are holes each shaped like an arc centered on a first opening 11. Since a plurality of second openings 12 are also arranged in the form of a circumference in this case, an annular pocket space formed between a peripheral portion of a diaphragm and a pump body can be quickly filled with fluid, and the flow rate can be increased.

While the unimorph type in which a piezoelectric element that expands and contracts in the planar direction by the application of voltage is bonded to one side of a diaphragm is shown in the first to fourth embodiments, a bimorph type in which piezoelectric elements that expand and contract in opposite directions are respectively bonded to both sides of a diaphragm, or a type in which a bimorph piezoelectric element that bends in itself is bonded to one side of the diaphragm can be used.

While the piezoelectric pump shown in Fig. 2 has a structure in which the top plate, the diaphragm, and the presser plate are stacked, the structure is not limited thereto. Further, the outer shape of the top plate, the diaphragm, and the presser plate do not always need to be rectangular, but may be circular.

While the diaphragm and the pump body are in contact with each other in the initial state in the embodiment shown in Fig. 3, a shallow concave portion may be provided in the pump body so that a narrow space (pump chamber) is formed between the diaphragm and the pump body. However, it is preferable that the first opening and the second openings be closed by the diaphragm in the initial state.

While the piezoelectric pump of the present invention is used as a pump for transporting compressible fluid, such as air, in the above-described embodiments, it is also applicable to imcompressible fluid such as liquid. Since the piezoelectric pump of the present invention has a high discharging pressure, for example, it can be used as a compressor pump in a cooling device.

### Brief Description of Drawings

Fig. 1 is a general perspective view of a piezoelectric pump according to a first embodiment of the present invention.
Fig. 2 is an exploded perspective view of the piezoelectric pump shown in Fig. 1.
Fig. 3 includes cross-sectional views of the piezoelectric pump shown taken along line A-A in Fig. 1, showing a pumping operation in a tertiary resonance mode.
Fig. 4 includes cross-sectional views of the piezoelectric pump taken along line A-A in Fig. 1, showing a pumping operation in a primary resonance mode.
Fig. 5 includes cross-sectional views showing a pumping operation of a piezoelectric pump according to a second embodiment of the present invention.
Fig. 6 includes cross-sectional views showing a pumping operation of a piezoelectric pump according to a third embodiment of the present invention.
Fig. 7 is a perspective view of a piezoelectric pump according to a fourth embodiment of the present invention. Reference Numerals

10: pump body (top plate)
11: first opening
12: second opening
16: second opening
20: diaphragm
22: circular region
23: piezoelectric element
25: second opening
30: presser plate

## Claims

1. A piezoelectric pump comprising:
a pump body;
a diaphragm fixed at an outer peripheral portion to the pump body;
a piezoelectric element bonded to a center portion of the diaphragm;
a first opening provided in a portion of the pump body opposing the substantial center portion of the diaphragm; and
a second opening provided in an intermediate region between the center portion and the outer peripheral portion of the diaphragm or in a portion of the pump body opposing the intermediate region,
wherein the diaphragm is formed by a metal plate,
wherein the piezoelectric element has a size such as to cover the first opening and such as not to reach the second opening, and
wherein a portion of the diaphragm opposing the first opening and a portion of the diaphragm opposing the second opening are bent in opposite directions by applying a voltage having a predetermined frequency to the piezoelectric element so that fluid is drawn in from one of the first opening and the second opening and is discharged from the other opening.

2. The piezoelectric pump according to claim 1, wherein the fluid is compressible fluid, and the fluid is drawn in from the first opening and is discharged from the second opening by applying a voltage near a primary resonance frequency of a displacement member defined by the diaphragm and the piezoelectric element to the piezoelectric element.

3. The piezoelectric pump according to claim 1, wherein the fluid is compressible fluid, and the fluid is drawn in from the second opening and is discharged from the first opening by applying a voltage near a tertiary resonance frequency of a displacement member defined by the diaphragm and the piezoelectric element to the piezoelectric element.

4. The piezoelectric pump according to claim 3, wherein the second opening is provided at a position where the diaphragm is maximally displaced or outside the position.

5. The piezoelectric pump according to claim 3 or 4, wherein a plurality of the second openings are provided on the same circumference centered on the first opening.
